# FASCICULE DE BREVET EUROPEEN

(11) **EP 3 376 633 B1**
(45) Date de publication et mention de la délivrance du brevet: **15.09.2021**
(21) Numéro de dépôt: 18160104.8
(22) Date de dépôt: 06.03.2018
(51) Int. Cl.: H02J 7/00, H02J 9/06, E06B 9/02, H01M 10/615, E06B 9/68

(54) **DISPOSITIF MOTEUR**
MOTORVORRICHTUNG
MOTOR DEVICE

(30) Priorité: 16.03.2017 FR 1752152
(43) Date de publication de la demande: 19.09.2018
(73) Titulaire: BHG, 68220 Attenschwiller (FR)
(72) Inventeur: FRITSCH, Thomas, 67800 HOENHEIM (FR); JACQUIN, Dominique, 68130 CARSPACH (FR)
(74) Mandataire: Cabinet Bleger-Rhein-Poupon

(56) Documents cités:
- WO-A1-2015/007215
- WO-A1-2015/166386
- FR-A1- 3 036 129
- US-A1- 2014 111 007

## Description

La présente invention entre dans le domaine des dispositifs moteurs.

Un tel dispositif moteur trouvera une application particulière pour des dispositifs ou moyens de fermeture de bâtiment et/ou d'occultation solaire de type volet roulant ou battant, brise soleil, store, store banne ou similaire.

De manière connue, ce type de dispositif de fermeture et/ou d'occultation comporte un caisson dans lequel se trouve un tube d'enroulement des différentes lames du volet ou du store. L'enroulement des lames du volet roulant autour dudit tube est assuré par un moteur électrique qui actionne la rotation du tube d'enroulement.

De manière générale, l'alimentation électrique du moteur est assurée par son raccordement au réseau d'alimentation générale du bâtiment.

Néanmoins, ce type d'alimentation du moteur pose problème en cas de coupure du réseau d'alimentation générale. En effet, lors d'une coupure du réseau, un opérateur ne peut plus agir sur l'ouverture ou la fermeture d'un tel volet roulant en commandant électriquement l'enroulement ou le déroulement des lames autour du tube d'enroulement sous l'action du moteur.

L'une des solutions, pour remédier à ce problème, est proposée dans la demande FR 3 036 129. Cette solution consiste à équiper de tels dispositifs de volets roulants d'une alimentation autonome sous forme de batterie, avantageusement de batterie lithium. Cette dernière alimente directement ledit moteur. Ladite batterie étant avantageusement rechargée par une alimentation secteur. En d'autres termes, la batterie constitue l'alimentation principale du moteur, l'alimentation secteur n'assure que le rechargement de ladite batterie. Ainsi, même en cas de coupure du réseau d'alimentation générale, ladite batterie chargée assure l'alimentation du moteur pendant une durée équivalente à celle de son autonomie de charge.

Néanmoins, cette solution ne présente pas encore pleine satisfaction. En effet, ces batteries sont dimensionnées pour assurer l'alimentation du moteur pendant une durée couvrant les coupures de réseau électrique, soit de l'ordre de quelques jours. De plus, ces batteries lithium ne peuvent être rechargées lorsque la température est inférieure ou égale à 0°C. En effet, dans ces conditions de température, une recharge de ces batteries lithium entraine leur détérioration.

Ainsi, si la durée de la coupure de l'alimentation générale est supérieure à la durée d'autonomie de la batterie lithium, et que la température est ≤ 0 °C, le rechargement de la batterie est proscrit. En conséquence, il devient à nouveau impossible de commander électriquement sous l'action du moteur l'ouverture et la fermeture du volet roulant.

Par exemple, dans le cas où la batterie a une autonomie de 3 jours, si la température est ≤ 0°C pendant une période > 3 jours, la batterie lithium d'alimentation du moteur ne peut pas se recharger. Ainsi, après 3 jours de grand froid, les volets roulants ne seront plus fonctionnels, un opérateur ne pourra plus agir sur leur ouverture ou fermeture.

Une des solutions pour résoudre ce problème serait de surdimensionner lesdites batteries afin d'augmenter leur autonomie de fonctionnement. Cependant, cette solution est inappropriée. En effet, le surdimensionnement des batteries d'alimentation du moteur génère des coûts supplémentaires et engendre un problème d'encombrement du dispositif moteur dans lequel se trouvent lesdites batteries.

La présente invention a pour but de pallier les inconvénients de l'état de la technique en proposant un dispositif moteur pour moyen de fermeture de bâtiment et/ou d'occultation solaire de type volet roulant ou battant, brise soleil, store, store banne ou similaire, selon la revendication 1.

Selon l'invention, les moyens de rechargement de la batterie vont pouvoir alimenter soit la résistance de chauffage soit la batterie.

Le capteur de température permet de relever et mesurer la température au sein du carter.

Les moyens de mesure du niveau de charge de la batterie permettent de connaître le niveau de charge et l'autonomie de la batterie.

La mesure de la température peut se faire à une fréquence définie par exemple par un logiciel programmé. Il en va de même pour la mesure du niveau de charge de la batterie. Par exemple, on peut choisir de mesurer la température au sein du carter une fois par jour à une certaine heure, ou encore uniquement quand les moyens de mesure indiquent que le niveau de charge de la batterie est faible, c'est-à-dire inférieur à une consigne donnée.

Le capteur de température et les moyens de mesure du niveau de charge de la batterie sont reliés à l'électronique de commande, qui est prédisposé à charger soit la résistance soit la batterie en fonction d'une valeur de température fonctionnelle donnée et d'un niveau de charge de la batterie donné.

On entend par « température fonctionnelle de rechargement de la batterie » la gamme de température pour laquelle on peut réaliser l'opération de rechargement de la batterie sans risquer de la détériorer.

Par exemple, dans le cadre d'une batterie lithium, si la température fonctionnelle de chargement de la batterie est de 0°C et le niveau de charge minimum de la batterie que l'on souhaite avoir en permanence est de 90 %, alors l'électronique de commande, détectant en premier lieu un niveau de charge de batterie inférieur à 90% puis en second une température au sein du carter inférieure à 0°C, va d'abord commander l'alimentation de la résistance de chauffage.
Puis, dès que le capteur détectera une température au sein du carter supérieure à 0°C, l'information sera transmise à l'électronique de commande. Cette dernière va alors basculer l'alimentation vers la batterie, jusqu'à ce qu'elle atteigne le niveau de charge désiré selon une consigne donnée.

Ainsi, grâce au dispositif moteur de l'invention et à sa conception, il n'y a aucun risque que le chargement de la batterie se réalise lorsque l'on est en dehors des conditions de températures fonctionnelles de rechargement. Ainsi, le dispositif de l'invention permet d'éviter une détérioration de la batterie par l'opération de son rechargement durant des conditions inadéquates.

De plus, selon d'autres caractéristiques du dispositif moteur de l'invention :
- la batterie d'alimentation consiste en une batterie lithium,
- ladite température fonctionnelle de rechargement de ladite batterie est ≥ à 0°C.

Les batteries lithium présentent l'avantage de nécessiter peu d'entretien, d'avoir un taux d'autodécharge faible par rapport notamment aux batteries au plomb, d'être légères et compactes et de délivrer toutes leurs capacités, même à fort courant de décharge. Néanmoins, ces batteries lithium nécessitent un rechargement à une température ≥ 0°C. En effet, une recharge des batteries lithium en-dessous de leur température fonctionnelle de rechargement, c'est-à-dire à une température ≤ 0°C, entraine une détérioration de la batterie lithium.

Selon une autre caractéristique additionnelle du dispositif moteur de l'invention, lesdits moyens de rechargement de ladite batterie consistent en des moyens d'alimentation électrique de type secteur ou panneaux photovoltaïques.

Les moyens de rechargement de type panneaux photovoltaïques présentent comme avantage d'être économiques en termes de gain d'énergie et écologiques notamment par l'utilisation d'une énergie propre.

Dans le cas où les moyens de rechargement sont de type secteur, généralement de l'ordre de 230 V alternatif, une adaptation de cette tension en une tension continue et un niveau compatible à la tension batterie est nécessaire. Cette adaptation pourra se faire, par exemple, par l'intermédiaire d'un transformateur et d'un redresseur.

Le fait que les moyens de rechargement de la batterie consistent en des moyens d'alimentation électrique de type secteur, combiné au fait que seule la batterie alimente le moteur, présente plusieurs avantages.

En particulier, dans cette configuration, la tension secteur est convertie en une tension d'alimentation de la batterie qui est de plus faible puissance que la tension secteur traditionnelle nécessaire au fonctionnement d'un dispositif moteur.

Comme seule la batterie alimente le moteur et que le fonctionnement du dispositif moteur de l'invention ne fonctionne qu'un nombre limité de fois par jour, le rechargement de la batterie peut se faire très lentement et avec une alimentation de faible tension par rapport à la tension secteur. Ainsi, dans la configuration de l'invention, la puissance nécessaire pour charger la batterie peut être faible, et le rechargement peut se faire lentement lorsque le dispositif moteur ne fonctionne pas, par exemple quand le volet est ouvert, d'où un coût de revient faible pour le fonctionnement du dispositif moteur. En conséquence, la résistance que peut alimenter une telle alimentation de faible puissance est nécessairement elle-même de faible puissance.

Selon d'autres caractéristiques du dispositif de l'invention :
- ladite résistance de chauffage présente une puissance maximum ≤ à 1 watt, et est alimentée électriquement en dérivation par rapport à ladite batterie, auxdits moyens de rechargement de ladite batterie,
- ledit carter dudit moteur est réalisé dans une matière synthétique isolante limitant les déperditions de chaleur.

Un carter en matière synthétique isolante permet de limiter les déperditions de chaleur au maximum. Ainsi, avec ladite matière isolante, la conservation de chaleur est telle qu'une simple résistance, par exemple d'une puissance ≤ à 1 watt est suffisante pour faire basculer la température au sein du carter au-dessus de la température fonctionnelle de rechargement de la batterie lithium.

La présente invention concerne également un tube d'enroulement d'un dispositif de volet roulant, autour duquel viennent s'entourer les lames dudit volet roulant. De manière spécifique, ledit dispositif moteur de l'invention étant inséré au sein dudit tube d'enroulement.

Ainsi, à la fois le carter moteur en matière synthétique que les lames du volet enroulées autour du tube d'enroulement, créent un environnement clos et isolé limitant les déperditions de chaleur. C'est pourquoi, dans cette configuration, quand le volet roulant est ouvert, une simple résistance de 1 watt, en cas de grand froid prolongé, suffit à chauffer l'intérieur du carter de logement. Le tube d'enroulement contribue donc à isoler davantage l'ensemble du dispositif moteur de l'invention, de sorte que le besoin en réchauffement pour assurer le rechargement de la batterie, en cas de température très basse, reste relativement faible et qu'une résistance de 1 watt suffit à assurer la montée en température nécessaire dans ledit carter.

En outre, une résistance de 1 watt présente l'avantage de se situer dans les normes de consommation de veille, c'est-à-dire d'une consommation électrique d'un ensemble électronique de commande d'un appareillage lorsque celui-ci est à l'arrêt.

Ainsi, dans le cas d'un volet roulant, l'utilisation du dispositif moteur de l'invention implique que, même pendant une période hivernale prolongée, par exemple quand pendant plus de 15 jours les températures sont négatives, pour autant que l'ensoleillement en journée soit suffisant, il est toujours possible de recharger les batteries notamment au travers de panneaux photovoltaïques.

C'est dans le cadre de cette démarche inventive que l'on a remarqué que l'implantation desdites batteries dans le caisson du volet roulant est avantageuse, en particulier pour résoudre le problème de rechargement de ces batteries même en cas de conditions climatiques défavorables. En effet, lesdites batteries de l'art antérieur sont entourées, lorsque le volet roulant est ouvert, à la fois d'un carter tubulaire du moteur d'entraînement du tube d'enroulement, des différentes lames du volet roulant et du caisson. Ces différents éléments représentant donc des couches successives capables d'isoler lesdites batteries par rapport à la température extérieure < à 0°C pendant une durée prolongée supérieure à la durée d'autonomie de la batterie.

Le dispositif moteur de l'invention au sein de son tube d'enroulement représente la solution idéale aux problèmes de rechargement des batteries rencontrés dans l'art antérieur.

En outre, la présente invention concerne également un procédé de rechargement d'une batterie d'alimentation d'un moteur pour moyen de fermeture de bâtiment et/ou d'occultation solaire de type volet roulant ou battant, brise soleil, store, store banne ou similaire selon la revendication 7.

Selon un mode de réalisation particulier du procédé de l'invention, on stoppe le rechargement de la batterie, quand le niveau de charge de la batterie est de 100%.

Ainsi, dès que la batterie est rechargée intégralement, le procédé de rechargement de l'invention s'arrête. Le procédé recommencera dès détection d'un déchargement de la batterie en dessous d'une consigne donnée, peu importe les conditions climatiques de température et la durée de ces conditions.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement une vue du dispositif moteur de l'invention ;
- la figure 2 représente schématiquement une vue d'un tube d'enroulement d'un dispositif de volet roulant de l'invention comprenant ledit dispositif moteur de l'invention.

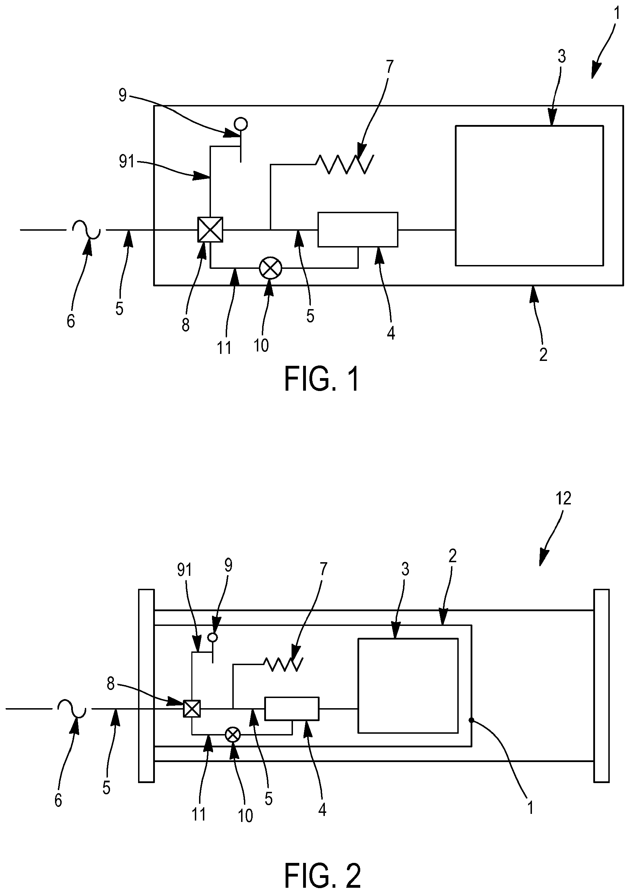

La présente invention concerne un dispositif moteur 1 tel que visible sur la figure 1. Ledit dispositif moteur 1 étant prévu spécifiquement pour des moyens de fermeture de bâtiment et/ou d'occultation solaire de type volet roulant ou battant, brise soleil, store, store banne ou similaire.

Ledit dispositif moteur 1 comporte un carter 2 de logement d'un moteur électrique 3.

Avantageusement, ledit carter 2 dudit moteur 3 est réalisé dans une matière synthétique isolante limitant les déperditions de chaleur.

Selon l'invention, ledit moteur 3 est alimenté par au moins une batterie électrique 4.

Ladite batterie 4, telle que visible sur la figure 1, comporte des moyens de raccordement 5 à des moyens de rechargement 6 de ladite batterie 4.

Selon un premier mode de réalisation de l'invention, lesdits moyens de rechargement 6 consistent en des moyens d'alimentation électrique de type secteur. Par exemple, si le réseau secteur est en 220-230 volts alternatifs, les moyens d'alimentation pourront se présenter sous forme d'un transformateur et d'un redresseur de courant pour une alimentation en courant continu basse tension des batteries 4. Ces moyens d'alimentation pourront encore prendre la forme d'un pont réducteur constitué de composants électroniques simples, connus par l'homme du métier, pour assurer une alimentation et un rechargement à puissance réduite de la ou des batteries. Par exemple encore, si le réseau secteur d'alimentation électrique est de type basse tension 12-24 volts, alternatif, lesdits moyens d'alimentation peuvent être par exemple des redresseurs de courant.

Selon un second mode de réalisation de l'invention, lesdits moyens de rechargement 6 consistent en des moyens d'alimentation électrique de type panneaux photovoltaïques présents par exemple sur la façade des bâtiments.

Selon une spécificité de l'invention, le dispositif moteur 1 comporte, logée dans son carter 2, une résistance de chauffage 7.

Selon un mode de réalisation particulier, ladite résistance de chauffage 7 présente une puissance maximum de 1 watt, et est alimentée électriquement en dérivation, par rapport à ladite batterie 4, auxdits moyens de rechargement 6 de ladite batterie 4.

En d'autres termes, ladite résistance de chauffage 7 est raccordée en dérivation auxdits moyens de rechargement 6 tel que visible sur la figure 1.

De cette manière, les moyens de rechargement 6 peuvent alimenter soit la batterie 4 soit la résistance 7.

Plus spécifiquement, le contrôle et l'activation de cette alimentation électrique se font par une électronique de commande 8.

En d'autres termes, l'électronique de commande 8 est destinée à la gestion de l'alimentation de la résistance de chauffage 7, ou de la batterie 4, par lesdits moyens de rechargement 6.

Selon l'invention, l'électronique de commande 8 est associée à un capteur de température 9 ainsi qu'à des moyens de mesure du niveau de charge 10 de la batterie 4.

L'association de l'électronique de commande 8 au capteur de température 9 se fait par les connections 91.

De la même manière, l'association de l'électronique de commande 8 avec les moyens de mesure du niveau de charge 10 de la batterie 4 se fait par les connections 11.

Ledit capteur de température 9 permet de mesurer la température au sein du carter 2.

Lesdits moyens de mesure du niveau de charge 10 permettent de mesurer le niveau de charge de la batterie 4, c'est-à-dire d'informer l'électronique de commande 8 que l'autonomie restante de la batterie 4 est proche d'une consigne donnée.

Ainsi, l'électronique de commande 8, en relation avec le capteur de température 9 et les moyens de mesure du niveau de charge 10, va générer le rechargement de la batterie 4.

Selon l'invention, avant d'initier le rechargement de ladite batterie 4 et si la température détectée au sein dudit carter 2 par ledit capteur 9 est inférieure à la température fonctionnelle de rechargement de ladite batterie 4, ladite électronique de commande 8 active l'alimentation de ladite résistance de chauffage 7 jusqu'à ce que la température détectée au sein dudit carter 2 soit supérieure à ladite température fonctionnelle de rechargement.

Selon un mode de réalisation particulier, la batterie 4 est une batterie lithium et ladite température fonctionnelle de rechargement de ladite batterie est supérieure à 0°C.

Ainsi, dans ce mode de réalisation, si les moyens de mesure 10 détectent un niveau de charge de la batterie 4 inférieur à une consigne donnée, et que la température mesurée au sein du carter 2 par le capteur 9 est inférieure à 0°C, alors l'électronique de commande 8 réglée pour initier le rechargement de la batterie 4 va d'abord activer l'alimentation de la résistance 7. Puis, dès que la température mesurée passe au-dessus des 0°C, l'électronique de commande 8 va activer l'alimentation de la batterie 4 pour la charger.

Ainsi, grâce à l'invention, le rechargement de la batterie 4 est réalisé uniquement lorsque l'on est dans une gamme de température fonctionnelle pour le rechargement. Ainsi, la batterie 4 ne peut pas être rechargée lorsque les conditions de température sont inadéquates. L'invention permet de limiter le risque de détérioration de la batterie 4 lors de son rechargement.

De plus, tel que visible sur la figure 2, la présente invention concerne également un tube d'enroulement 12 d'un dispositif de volet roulant. Les lames dudit volet roulant étant destinées à venir entourer ledit tube 12 lorsque le volet est ouvert.

Selon l'invention, ledit tube 12 comporte en son sein ledit dispositif moteur 1 de l'invention.

De préférence, ledit tube 12 comporte un dispositif moteur 1 muni d'une batterie lithium 4 rechargée par des moyens d'alimentation de type panneaux photovoltaïques.

Un volet roulant présentant un tel tube 12 reste fonctionnel. Il peut s'ouvrir et se fermer même quand la période où les températures sont négatives est supérieure à la durée d'autonomie de la batterie 4. Ceci est possible car, grâce à la présence de la résistance 7 alimentée par les panneaux photovoltaïques, la température au sein du carter 2 et du tube 12 peut redevenir positive. Ainsi, même si les conditions extérieures présentent des températures négatives au sein du tube d'enroulement 12, plus spécifiquement au sein du carter 2, l'alimentation de la résistance 7 va inverser cette tendance. Il en résulte qu'un rechargement de la batterie 4 est possible dans des conditions propices sans risquer de détérioration, malgré des conditions de températures extérieures négatives.

Grâce à cette invention, le rechargement de la batterie 4, insérée au sein du carter 2, lui-même inséré dans le tube 12, est possible même en cas de période prolongée de température négative.

La présente invention concerne également un procédé de rechargement d'une batterie d'alimentation d'un moteur pour moyen de fermeture de bâtiment et/ou d'occultation solaire de type volet roulant ou battant, brise soleil, store, store banne ou similaire comportant un carter de logement d'un moteur électrique alimenté par au moins une batterie électrique, laquelle comportant des moyens de raccordement à des moyens de rechargement, dans lequel on réalise successivement les étapes suivantes :
a) On mesure le niveau de charge de la batterie,
b) On mesure la température du carter, si le niveau de charge de ladite batterie est ≤ à une consigne donnée,
c) On compare la température mesurée à celle fonctionnelle de rechargement de la batterie,
d) On constate que la température mesurée au sein du carter de logement est inférieure à la température fonctionnelle de rechargement de la batterie, on chauffe l'intérieur du carter et, lorsque la température fonctionnelle de rechargement de la batterie est atteinte ou dépassée, on alimente la batterie en rechargement.

Les étapes a) et b) sont programmées pour s'établir à une fréquence donnée. Dès que la température au sein du carter est inférieure à la température de rechargement fonctionnelle et que le niveau de charge détectée est inférieur à une consigne donnée, le rechargement de la batterie est initié, par exemple par une électronique de commande 8 tel que susmentionné.

Le procédé de rechargement de la batterie débute par la mesure de la température au sein du carter. Puis, la température détectée à l'intérieur du carter est comparée avec la température de rechargement fonctionnelle connue de la batterie. S'il est constaté que la température mesurée au sein du carter de logement est inférieure à la température fonctionnelle de rechargement de la batterie, on chauffe l'intérieur du carter en alimentant une résistance de chauffage présente au sein du carter.

En effet, l'alimentation en énergie d'une résistance de chauffage située à l'intérieur du carter va provoquer un dégagement de chaleur. Ce dernier va permettre une augmentation en température de l'intérieur du carter.

Puis, lorsque la température fonctionnelle de rechargement de la batterie est atteinte ou dépassée au sein dudit carter sous l'effet de la résistance, on alimente la batterie en rechargement. Selon le procédé de rechargement de l'invention, on alimente la batterie pour la recharger jusqu'à ce que le niveau de charge détecté corresponde à une consigne donnée, puis on stoppe le rechargement.

Selon un mode de réalisation particulier, la consigne donnée pour stopper le rechargement est que le niveau de charge de la batterie soit de 100%.

Ainsi, la présente invention présente l'avantage de permettre d'assurer le rechargement des batteries électriques d'alimentation d'un moteur à volonté, aux meilleurs moments, et dans les conditions les plus adaptées.

Le dispositif moteur 1 utilisé dans le domaine des volets roulants permet de garantir une solution de secours pour l'ouverture et la fermeture du volet, ceci même en cas de rupture d'alimentation réseau secteur prolongée, et/ou de climat ensoleillé avec des températures négatives prolongées.

## Revendications

1. Dispositif moteur (1) pour moyen de fermeture de bâtiment et/ou d'occultation solaire de type volet roulant ou battant, brise soleil, store, store banne ou similaire comportant :
- un carter (2) de logement d'un moteur électrique (3) alimenté par au moins une batterie électrique (4) ;
- ladite batterie (4) d'alimentation dudit moteur (3) comportant des moyens de raccordement (5) à des moyens de rechargement (6) de ladite batterie (4), **caractérisé en ce que** ledit dispositif moteur (1) comporte, logées dans ledit carter (2) :
* une résistance de chauffage (7) raccordée en dérivation auxdits moyens de rechargement (6), et
* une électronique de commande (8) associée à un capteur de température (9) ainsi qu'à des moyens de mesure du niveau de charge (10) de la batterie (4) configurés pour informer que l'autonomie restante de la batterie (4) est proche d'une consigne donnée
* l'électronique de commande (8) étant configurée pour gérer l'alimentation de la résistance de chauffage (7) et de la batterie (4) par lesdits moyens de rechargement (6), de sorte que, avant d'initier le rechargement de ladite batterie (4) suite à la détection d'un niveau de charge (4) étant inférieur à la consigne donnée et si la température détectée au sein dudit carter (2) par ledit capteur (9) est inférieure à la température fonctionnelle de rechargement de ladite batterie (4), ladite électronique de commande (8) est configurée pour activer l'alimentation de ladite résistance de chauffage (7) jusqu'à ce que la température détectée au sein dudit carter (2) soit égale ou supérieure à ladite température fonctionnelle de rechargement.

2. Dispositif moteur (1), selon la revendication 1, **caractérisé en ce que** la batterie (4) d'alimentation du moteur (3) consiste en une batterie lithium.

3. Dispositif moteur (1), selon la revendication précédente, **caractérisé en ce que** ladite température fonctionnelle de rechargement de ladite batterie (4) est supérieure ou égale à 0°C.

4. Dispositif moteur (1), selon l'une quelconque des revendications précédentes, **caractérisé en ce que** lesdits moyens de rechargement (6) de ladite batterie (4) consistent en des moyens d'alimentation électrique de type secteur ou panneaux photovoltaïques.

5. Dispositif moteur (1), selon l'une quelconque des revendications précédentes, **caractérisé en ce que** ladite résistance de chauffage (7) présente une puissance inférieure ou égale à 1 watt, et est alimentée électriquement en dérivation, par rapport à ladite batterie (4), auxdits moyens de rechargement (6) de ladite batterie (4).

6. Dispositif moteur (1), selon l'une quelconque des revendications précédentes, **caractérisé en ce que** ledit carter (2) de logement dudit moteur (3) est réalisé dans une matière synthétique isolante limitant les déperditions de chaleur.

7. Procédé de rechargement d'une batterie d'alimentation d'un moteur pour moyen de fermeture de bâtiment et/ou d'occultation solaire de type volet roulant ou battant, brise soleil, store, store banne ou similaire comportant, un carter de logement d'un moteur électrique alimenté par au moins une batterie électrique, laquelle comportant des moyens de raccordement à des moyens de rechargement **caractérisé en ce que** :
• On mesure le niveau de charge de la batterie,
• On mesure la température du carter, si le niveau de charge de ladite batterie est inférieure à une consigne donnée,
• On compare la température mesurée à celle fonctionnelle de rechargement de la batterie,
• On constate que la température mesurée au sein du carter de logement est inférieure à la température fonctionnelle de rechargement de la batterie, on chauffe l'intérieur du carter et, lorsque la température fonctionnelle de rechargement de la batterie est atteinte ou dépassée, on alimente la batterie en rechargement.

8. Procédé de rechargement d'une batterie d'alimentation d'un moteur dudit dispositif moteur, selon la revendication précédente, **caractérisé en ce qu'**on stoppe le rechargement de la batterie quand le niveau de charge de la batterie est de 100%.

9. Tube d'enroulement (12) d'un dispositif de volet roulant, autour duquel viennent s'entourer les lames dudit volet roulant, **caractérisé en ce que** ledit dispositif moteur (1) selon l'une quelconque des revendications 1 à 6 est inséré au sein dudit tube d'enroulement (12).

## Patentansprüche

1. Motorvorrichtung (1) für Gebäudeschließ- und/oder Sonnenschutzmittel wie Rolljalousie oder Rollladen, Sonnenschutz, Rollvorhang, Markise oder dergleichen, umfassend:
- ein Gehäuse (2) zum Unterbringen eines Elektromotors (3), der von mindestens einer elektrischen Batterie (4) versorgt wird;
- wobei die Batterie (4) zur Versorgung des Motors (3) Mittel zum Verbinden (5) mit Auflademitteln (6) der Batterie (4) umfasst, **dadurch gekennzeichnet, dass** die Motorvorrichtung (1) Folgendes umfasst, das in dem Gehäuse (2) untergebracht ist:
* einen Heizwiderstand (7), der im Bypass mit den Auflademitteln (6) verbunden ist, und
* eine Steuerelektronik (8), die einem Temperatursensor (9) zugeordnet ist, sowie Mittel zum Messen des Ladezustands (10) der Batterie (4), die konfiguriert sind, um zu informieren, dass die verbleibende Autonomie der Batterie (4) nahe einem bestimmten Sollwert liegt,
* wobei die Steuerelektronik (8) konfiguriert ist, um die Stromversorgung des Heizwiderstands (7) und der Batterie (4) durch die Auflademittel (6) zu verwalten, so dass vor dem Einleiten des Aufladens der Batterie (4) nach Erkennen eines Ladezustands (4), der niedriger als der bestimmte Sollwert ist, und wenn die vom Sensor (9) in dem Gehäuse (2) erfasste Temperatur niedriger als die funktionsgerechte Aufladetemperatur der Batterie (4) ist, die Steuerelektronik (8) konfiguriert ist, um die Versorgung des Heizwiderstands (7) zu aktivieren, bis die innerhalb des Gehäuses (2) erfasste Temperatur gleich oder größer als die funktionsgerechte Aufladetemperatur ist.

2. Motorvorrichtung (1) nach Anspruch 1, **dadurch gekennzeichnet, dass** die Batterie (4) zur Versorgung des Motors (3) aus einer Lithiumbatterie besteht.

3. Motorvorrichtung (1) nach dem vorstehenden Anspruch, **dadurch gekennzeichnet, dass** die funktionsgerechte Aufladetemperatur der Batterie (4) größer als oder gleich 0 °C ist.

4. Motorvorrichtung (1) nach einem der vorstehenden Ansprüche, **dadurch gekennzeichnet, dass** die Auflademittel (6) der Batterie (4) aus elektrischen Versorgungsmitteln wie Stromnetz oder Photovoltaikmodulen bestehen.

5. Motorvorrichtung (1) nach einem der vorstehenden Ansprüche, **dadurch gekennzeichnet, dass** der Heizwiderstand (7) eine Leistung von weniger als oder gleich 1 Watt aufweist und elektrisch im Bypass, in Bezug auf die Batterie (4), mit den Auflademitteln (6) der Batterie (4) versorgt wird.

6. Motorvorrichtung (1) nach einem der vorstehenden Ansprüche, **dadurch gekennzeichnet, dass** das Gehäuse (2) zum Unterbringen des Motors (3) aus einem isolierenden synthetischen Material hergestellt ist, das die Wärmeverluste begrenzt.

7. Verfahren zum Aufladen einer Batterie zur Versorgung eines Motors für Gebäudeschließ- und/oder Sonnenschutzmittel wie Rolljalousie oder Rollladen, Sonnenschutz, Rollvorhang, Markise oder dergleichen, umfassend ein Gehäuse zum Unterbringen eines Elektromotors, der von mindestens einer elektrischen Batterie versorgt wird, die Mittel zum Verbinden mit Auflademitteln umfasst, **dadurch gekennzeichnet, dass**:
• der Ladezustand der Batterie gemessen wird,
• die Temperatur des Unterbringungsgehäuses gemessen wird, wenn der Ladezustand der Batterie unter einem bestimmten Sollwert liegt,
• die gemessene Temperatur mit der funktionsgerechten Aufladetemperatur der Batterie verglichen wird,
• bei Feststellung, dass die innerhalb des Unterbringungsgehäuses gemessene Temperatur niedriger als die funktionsgerechte Aufladetemperatur der Batterie ist, das Innere des Gehäuses erwärmt wird und bei Erreichen oder Überschreiten der funktionsgerechten Aufladetemperatur der Batterie die Batterie aufgeladen wird.

8. Verfahren zum Aufladen einer Batterie zur Versorgung eines Motors der Motorvorrichtung nach dem vorstehenden Anspruch, **dadurch gekennzeichnet, dass** das Aufladen der Batterie gestoppt wird, wenn der Ladezustand der Batterie 100 % beträgt.

9. Wickelrohr (12) einer Rolljalousievorrichtung, um das sich die Lamellen der Rolljalousie wickeln, **dadurch gekennzeichnet, dass** die Motorvorrichtung (1) nach einem der Ansprüche 1 bis 6 in das Wickelrohr (12) eingesetzt ist.

## Claims

1. A motor device (1) for building closure means and/or solar shading means such as rolling or hinged shutters, sunshades, blinds, awnings, or the like, comprising:
- a casing (2) for housing an electric motor (3) powered by at least one electric battery (4);
- said battery (4) for powering said motor (3) comprising connection means (5) for connecting to recharging means (6) of said battery (4), **characterized in that** said motor device (1) comprises, housed in said casing (2):
* a heating resistor (7) connected to said recharging means (6) as a bypass, and
* control electronics (8) associated with a temperature sensor (9) and means for measuring the charge level (10) of the battery (4) configured to indicate that the remaining autonomy of the battery (4) is close to a given setpoint,
* the control electronics (8) being configured to manage the power supply to the heating resistor (7) and to the battery (4) by said recharging means (6) such that, before initiating the recharging of said battery (4) following the detection of a charge level (4) lower than the given setpoint and
if the temperature detected within said casing (2) by said sensor (9) is lower than the functional recharging temperature of said battery (4), said control electronics (8) are configured to activate the power supply of said heating resistor (7) until the temperature detected within said casing (2) is equal to or greater than said functional recharging temperature.

2. The motor device (1) according to claim 1, **characterized in that** the battery (4) for powering the motor (3) is comprised of a lithium battery.

3. The motor device (1) according to the preceding claim, **characterized in that** said functional recharging temperature of said battery (4) is greater than or equal to 0°C.

4. The motor device (1) according to any of the preceding claims, **characterized in that** said recharging means (6) of said battery (4) are comprised of electrical power supply means in the form of a mains power supply or photovoltaic panels.

5. The motor device (1) according to any of the preceding claims, **characterized in that** said heating resistor (7) has a power less than or equal to 1 watt, and is powered electrically as a bypass, with respect to said battery (4), by said recharging means (6) of said battery (4).

6. The motor device (1) according to any of the preceding claims, **characterized in that** said casing (2) for housing said motor (3) is made of an insulating synthetic material which limits heat loss.

7. A method for recharging a battery for powering a motor for building closure means and/or solar shading means such as rolling or hinged shutters, sunshades, blinds, awnings, or the like, comprising a casing for housing an electric motor powered by at least one electric battery, said battery comprising connection means for connecting to recharging means, **characterized in that**:
• the charge level of the battery is measured,
• the temperature of the casing is measured, if the charge level of said battery is less than a given setpoint,
• the measured temperature is compared with the functional recharging temperature of the battery,
• if the temperature measured within the casing is determined to be lower than the functional recharging temperature of the battery, the interior of the casing is heated, and, when the functional recharging temperature of the battery is reached or exceeded, the battery is powered for recharging.

8. The method for recharging a battery for powering a motor of said motor device according to the preceding claim, **characterized in that** the recharging of the battery is stopped when the charge level of the battery is 100%.

9. A winding tube (12) of a rolling shutter device, around which the slats of said rolling shutter are wound, **characterized in that** said motor device (1) according to any of claims 1 to 6 is inserted within said winding tube (12).
